(19) Europäisches Patentamt
European Patent Office
Office européen des brevets

(11) **EP 4 475 291 A1**

(12) **EUROPEAN PATENT APPLICATION**
published in accordance with Art. 153(4) EPC

(43) Date of publication:
**11.12.2024 Bulletin 2024/50**

(21) Application number: **23749801.9**

(22) Date of filing: **01.02.2023**

(51) International Patent Classification (IPC):
**H01M 50/129** *(2021.01)* **H01M 10/0562** *(2010.01)*
**H01M 50/105** *(2021.01)*

(52) Cooperative Patent Classification (CPC):
**H01M 10/0562; H01M 50/105; H01M 50/129;**
**Y02E 60/10**

(86) International application number:
**PCT/JP2023/003263**

(87) International publication number:
**WO 2023/149485 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.02.2022 JP 2022015074**

(71) Applicant: **Toppan Holdings Inc.
Tokyo 110-0016 (JP)**

(72) Inventor: **MURAKI Takuya
Tokyo 110-0016 (JP)**

(74) Representative: **Hoffmann Eitle
Patent- und Rechtsanwälte PartmbB
Arabellastraße 30
81925 München (DE)**

(54) **SHEATHING MATERIAL FOR ALL SOLID STATE BATTERY AND ALL SOLID STATE BATTERY**

(57) A fully-solid-state battery packaging material includes at least a substrate layer, a barrier layer, and a sealant layer in this order. The moisture content of the sealant layer is 2700 ppm by mass or less. The sealant layer is, for example, a polyolefin film containing a polyolefin-based resin or a polyester film containing a polyester-based resin.

FIG.1

## Description

[Technical Field]

The present disclosure relates to a fully-solid-state battery packaging material and a fully-solid-state battery.

[Background Art]

In recent years, the development of fully-solid-state batteries capable of having increased capacity has progressed rapidly. Unlike current lithium-ion batteries, fully-solid-state batteries have a solid electrolyte and therefore can be used at high temperatures, which could not be achieved before. Since this obviates the need for equipment for cooling the batteries, it is expected to improve space efficiency, reduce costs, and reduce power consumption.
Such fully-solid-state batteries have a battery body including a solid electrolyte and electrodes, and a packaging bag that accommodates the battery body. The packaging bag is obtained by heat-sealing a packaging material. The packaging material of such fully-solid-state batteries includes a substrate layer, a barrier layer, and a sealant layer in this order. The sealant layer is made of a polyester film or the like to impart heat resistance (see, for example, PTL 1 below).

[Citation List]

[Patent Literature]

[PTL 1] JP 6747636 B (for example, claim 5)

[Summary of the Invention]

[Technical Problem]

However, the packaging material for fully-solid-state batteries described in PTL 1 above has the following problem.
That is, in the case of the packaging material for fully-solid-state batteries described in PTL 1 above, air bubbles were sometimes observed all over the sealant layer during heat sealing.
The present disclosure has been made in view of the above problem, and aims to provide a fully-solid-state battery packaging material that can suppress the generation of air bubbles in the sealant layer during heat sealing, and a fully-solid-state battery using the same.

[Solution to Problem]

The inventors investigated the cause of the phenomenon in which the generation of air bubbles is observed throughout the sealant layer as described above. As a result, the inventors considered that the generation of air bubbles throughout the sealant layer is due to the high-temperature heat-sealing of the packaging material. In other words, the inventors considered that, when the packaging material is heat-sealed at a high temperature, the moisture in the sealant layer of the packaging material evaporates. The generated air bubbles expand abruptly, grow in size by easily combining with each other, and remain after cooling. Further, the inventors considered that the above phenomenon may also significantly depend on the moisture content in the sealant layer of the packaging material. As a result of further intensive study, the inventors found that the above problem can be solved by the following disclosure.
That is, the present disclosure is an fully-solid-state battery packaging material including at least a substrate layer, a barrier layer, and a sealant layer in this order, and moisture content of the sealant layer is 2700 ppm by mass or less.
According to the packaging material of the present disclosure, generation of air bubbles in the sealant layer can be suppressed. This prevents the sealant layer from having rough parts (parts with many air bubbles) and dense parts (parts with few bubbles), and the sealing strength decreasing in the rough parts. Therefore, even if the use of the fully-solid-state battery in a high-temperature environment causes the battery body containing a solid electrolyte to swell, and a force is exerted that acts to open the packaging bag, the packaging material can keep the packaging bag obtained by heat-sealing the packaging material air-tight. When a solid-state battery stores a sulfide-based solid electrolyte as the solid electrolyte in the packaging bag, and a gas such as hydrogen sulfide is generated from the reaction between moisture and the sulfide-based solid electrolyte in the packaging bag of the solid-state battery, leakage of such gas can be suppressed. Further, since the generation of air bubbles in the sealant layer that tend to provide passages for moisture is suppressed, entry of moisture from the outside of the packaging material is suppressed. Therefore, when a fully-solid-state battery contains a sulfide-based solid electrolyte as the solid electrolyte in the packaging bag, the generation of gas such as hydrogen sulfide from the reaction between moisture and the sulfide-based solid electrolyte in the packaging bag of the fully-solid-state battery can also be suppressed.

The moisture content of the sealant layer may be 2000 ppm by mass or less. In this case, it is possible to further suppress the generation of air bubbles in the sealant layer during heat sealing.

The moisture content of the sealant layer may be 200 ppm by mass or more.

In the fully-solid-state battery packaging material, the sealant layer is preferably a polyolefin film containing a polyolefin-based resin or a polyester film containing a polyester-based resin.

The sealing performance can be improved in this case. In addition, since polyolefin films and polyester films have heat resistance, the packaging material can further improve the heat resistance of the fully-solid-state battery.

In the fully-solid-state battery packaging material, it is preferable that the sealant layer is a polyolefin film, the polyolefin film contains an acid-modified polyolefin resin layer, and the acid-modified polyolefin resin layer is directly laminated to the barrier layer.

In this case, since the acid-modified polyolefin resin layer of the polyolefin film is directly laminated onto the barrier layer, the sealant layer incorporates less moisture than when the acid-modified polyolefin resin layer of the polyolefin film and the barrier layer are bonded with a polyurethane-based adhesive used as a high-temperature resistant adhesive. Therefore, even if the packaging material is repeatedly exposed to high temperatures, it is less likely that moisture will be released from the sealant layer each time. When the fully-solid-state battery contains a sulfide-based solid electrolyte as the solid electrolyte in the packaging bag, this suppresses the generation of hydrogen sulfide by the reaction between released moisture and sulfide.

In the fully-solid-state battery packaging material, the sealant layer preferably has a melting point of 250°C or lower.

In this case, the heat sealing temperature can be reduced since the sealant layer has a melting point of 250°C or lower. This further suppresses generation of air bubbles in the sealant layer during heat sealing. This suppresses decreases in the sealing strength and the barrier performance of the packaging material. Therefore, the packaging material can maintain the sealing of the packaging bag of the fully-solid-state battery tight enough.

In the fully-solid-state battery packaging material, the sealant layer preferably has a melting point of 150°C or higher.

Since the melting point of the sealant layer is 150°C or higher, it is possible to suppress the sealing strength of the packaging material from decreasing even when the packaging material is used in a high-temperature environment. When a fully-solid-state battery contains a sulfide-based solid electrolyte as the solid electrolyte in the packaging bag, and a gas such as hydrogen sulfide is generated from the reaction between moisture and the sulfide-based solid electrolyte in the packaging bag of the fully-solid-state battery, leakage of such gas can be suppressed.

Further, the present disclosure is a fully-solid-state battery including: a battery body containing a solid electrolyte; and a packaging bag that accommodates the battery body, characterized in that the packaging bag is obtained by heat-sealing the fully-state battery packaging material.

According to the fully-solid-state battery of the present disclosure, a packaging bag can be obtained by heat-sealing the fully-solid-state battery packaging material. The above-described packaging material can suppress generation of air bubbles in the sealant layer. Therefore, according to the fully-solid-state battery of the present disclosure, it is possible to suppress rough parts and dense parts being created in the sealant layer of the packaging material, and the sealing strength decreasing in the rough parts. Even if the use of the fully-solid-state battery in a high-temperature environment causes the battery body to swell and a force is exerted on the packaging bag to open it, the fully-solid-state battery can keep the packaging bag sealed air-tight by the packaging material. Further, since the generation of air bubbles in the sealant layer that tend to provide passages for moisture is suppressed, entry of moisture from the outside of the packaging material is suppressed. Therefore, when a sulfide-based solid electrolyte is used as the solid electrolyte, generation of gas such as hydrogen sulfide from the reaction between moisture and the sulfide-based solid electrolyte in the packaging bag of the fully-solid-state battery can also be suppressed.

In the fully-solid-state battery, the solid electrolyte may be a sulfide-based solid electrolyte.

In the present disclosure, the melting point refers to a peak melting temperature which is calculated according to the method described in JIS K 7121-1987. If there are two or more independent melting peaks, the lowest peak melting temperature is used.

In addition, in the present disclosure, when the sealant layer is a multilayer film, the melting point is defined as the melting point of the layer having the lowest melting point among the layers constituting the multilayer film.

[Advantageous Effects of the Invention]

According to the present disclosure, a fully-solid-state battery packaging material that can suppress the generation of air bubbles in the sealant layer during heat sealing, and a fully-solid-state battery using the same, are provided.

[Brief Description of the Drawings]

Fig. 1 is a schematic cross-sectional view illustrating a fully-solid-state battery packaging material according to an embodiment of the present disclosure.
Fig. 2 is a schematic cross-sectional view illustrating a solid-state battery packaging material according to another embodiment of the present disclosure.
Fig. 3 is a schematic cross-sectional view illustrating a solid-state battery packaging material according to yet another embodiment of the present disclosure.
Fig. 4 is a perspective view illustrating a solid-state battery according to an embodiment of the present disclosure.
Fig. 5 is a plan view illustrating a structure for obtaining evaluation samples in the Examples and Comparative Example.

[Description of the Embodiments]

Preferred embodiments of the present disclosure will now be described in detail with reference to the drawings. Throughout the drawings, the same or corresponding components are denoted by the same reference signs, and repeated description is omitted. Further, dimensional ratios of the drawings are not limited to the ratios shown in the drawings.

[Fully-Solid-State Battery Packaging Material]

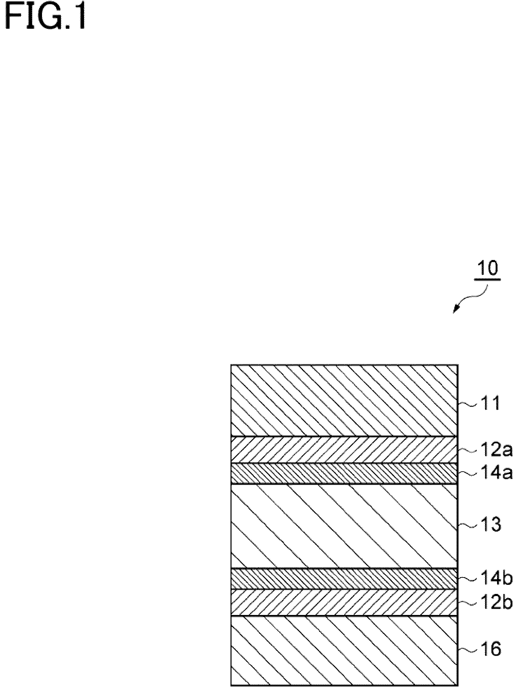

Fig. 1 is a schematic cross-sectional view illustrating an fully-solid-state battery packaging material according to an embodiment of the present disclosure. As shown in Fig. 1, the fully-solid-state battery packaging material (hereinafter also simply referred to as "packaging material") 10 of the present embodiment includes a substrate layer 11, a first adhesive layer 12a, a barrier layer 13, a second adhesive layer 12b, and a sealant layer 16 in this order. The moisture content in the sealant layer 16 is 2700 ppm by mass or less. As compared to a case where the moisture content in the sealant layer 16 exceeds 2700 ppm by mass, this packaging material 10 can better prevent air bubbles from being generated in the sealant layer 16 of the packaging material 10 when the packaging material 10 is heat-sealed.

Note that a first anticorrosion treatment layer 14a may be formed on the substrate layer 11 side of the barrier layer 13. A second anticorrosion treatment layer 14b may be formed on the sealant layer 16 side of the barrier layer 13. In the packaging material 10, the substrate layer 11 is the outermost layer, and the sealant layer 16 is the innermost layer. In other words, the packaging material 10 is used with the substrate layer 11 being on the outside of the fully-solid-state battery and the sealant layer 16 being on the inside of the fully-solid-state battery.

In the following, the layers forming the packaging material 10 will be described in detail.

<Substrate Layer>

The substrate layer 11 imparts heat resistance to the packaging material in the sealing step during production of the fully-solid-state battery, and prevents formation of pinholes that may occur during molding or distribution. In particular, the substrate layer 11 also imparts scratch resistance, chemical resistance, insulation, and the like when the packaging material is intended for a large fully-solid-state battery.

The substrate layer 11 is preferably a layer formed by an insulating resin. The resin may be polyester resin, polyamide resin, polyimide resin, polyamide-imide resin, polyetherketone resin, polyphenylene sulfide resin, polyetherimide resin, polysulfone resin, fluororesin, phenol resin, melamine resin, urethane resin, allyl resin, silicon resin, epoxy resin, furan resin, acetyl cellulose resin, or the like.

When these resins are applied to the substrate layer 11, they may be in the form of a stretched or unstretched film, or a coating film. The substrate layer 11 may be a single layer or a multilayer, and in the case of a multilayer, different resins can be used in combination. In the case of a film, it may be coextruded or laminated with an adhesive. In the case of a coating film, it may be formed by performing coating as many times as the number of layers, or a multilayer structure can be formed by combining films and coatings.

Among these resins, polyester resin and polyamide resin are preferable for the substrate layer 11 because they have good moldability. Examples of polyester resins include polyethylene terephthalate, polybutylene terephthalate, and polyethylene naphthalate. Examples of polyamide resins include nylon 6, nylon 6,6, a copolymer of nylon 6 and nylon 6,6, nylon 6, nylon 9T, nylon 10, polymetaxylylene adipamide (MXD6), nylon 11, and nylon 12.

When these resins are used in the form of a film, it is preferably a biaxially stretched film. The stretching methods used for the biaxially stretched film include, for example, sequential biaxial stretching, tubular biaxial stretching, simultaneous biaxial stretching, and the like. From the perspective of obtaining better deep drawing formability, the biaxially stretched film is preferably stretched using a tubular biaxial stretching method.

The substrate layer 11 preferably has a thickness in the range of 6 to 50 $\mu$m, and more preferably 10 to 30 $\mu$m. The

substrate layer 11, when having a thickness of 6 μm or more, tends to improve pinhole resistance and insulation performance of the packaging material 10. By the thickness of the substrate layer 11 being 50 μm or less, the total thickness of the packaging material 10 can be reduced.

The melting point of the substrate layer 11 is preferably higher than the melting point of the sealant layer 16, and more preferably 30°C or more higher than the melting point of the sealant layer 16 in order to suppress deformation of the substrate layer 11 during sealing.

<First Adhesive Layer>

The first adhesive layer 12a bonds the substrate layer 11 and the barrier layer 13. For example, the material used for forming the first adhesive layer 12a may be specifically a polyurethane resin prepared by reacting a bifunctional or higher functional isocyanate compound (polyfunctional isocyanate compound) with a main resin such as a polyester polyol, polyether polyol, acrylic polyol, carbonate polyol, or the like. These various polyols can be used alone or in combination of two or more, according to the functions and performance sought in the packaging material 10. Among other options, it is also possible to use an epoxy resin as the main component and add a curing agent thereto. Moreover, other various additives and stabilizers may be added to the adhesive mentioned above depending on the performance required of the adhesive.

The thickness of the first adhesive layer 12a is not particularly limited, but from the perspective of obtaining desired adhesive strength, conformability, processability and the like, for example, the thickness is preferably 1 μm to 10 μm, and more preferably 2 μm to 7 μm.

<Barrier Layer>

The barrier layer 13 has the function of a water vapor barrier that prevents moisture from infiltrating into the fully-solid-state battery. Further, the barrier layer 13 may have ductility for undergoing deep drawing. The barrier layer 13 may be, for example, a metal foil such as an aluminum, stainless steel, or copper foil, a metal deposited film, an inorganic oxide deposited film, a carbon-containing inorganic oxide deposited film, or a film provided with one or more of these deposited films. The film provided with a deposited film may be, for example, an aluminum deposited film or an inorganic oxide deposited film. These can be used singly or in combination of two or more. The barrier layer 13 is preferably made of a metal foil, more preferably an aluminum foil in view of weight (specific gravity), moisture resistance, processability, and cost.

The aluminum foil may be a soft aluminum foil, particularly one subjected to an annealing treatment since the foil can be imparted with a desired ductility for molding. It is more preferable to use an aluminum foil containing iron for the purpose of imparting further pinhole resistance and further ductility for molding. The iron content in the aluminum foil is preferably in the range of 0.1 mass% to 9.0 mass% relative to 100 mass% of aluminum foil, and more preferably in the range of 0.5 mass% to 2.0 mass%. The iron content of 0.1 mass% or more leads to a packaging material 10 having better pinhole resistance, and ductility and malleability. The iron content of 9.0 mass% or less enables a packaging material 10 having much better flexibility. Untreated aluminum foil can be used as the aluminum foil, but aluminum foil that has been subjected to a degreasing treatment is used preferably in order to impart corrosion resistance. When the aluminum foil is degreased, only one surface of the aluminum foil may be degreased, or both surfaces may be degreased.

The thickness of the barrier layer 13 is not particularly limited, but is preferably in the range of 9 μm to 200 μm, and more preferably 15 μm to 100 μm, in terms of barrier properties, pinhole resistance and processability.

<First and Second Anticorrosion Treatment Layers>

The first and second anticorrosion treatment layers 14a and 14b are layers provided to prevent corrosion of the metal foil (metal foil layer) or the like forming the barrier layer 13. The first anticorrosion treatment layer 14a also improves the adhesion between the barrier layer 13 and the first adhesive layer 12a. The second anticorrosion treatment layer 14b also improves the adhesion between the barrier layer 13 and the second adhesive layer 12b. The first and second anticorrosion treatment layers 14a and 14b may have the same configuration or different configurations. The first and second anticorrosion treatment layers 14a and 14b (hereinafter also simply referred as "anticorrosion treatment layers 14a and 14b") are formed by, for example, degreasing treatment, hydrothermal modification treatment, anodic oxidation treatment, chemical conversion treatment, or a combination of these treatments.

Examples of the degreasing treatment include acid degreasing treatment and alkaline degreasing treatment. The acid degreasing may be a method using an inorganic acid such as sulfuric acid, nitric acid, hydrochloric acid or hydrofluoric acid alone, or a mixture of these acids. The acid degreasing may include use of an acid degreasing agent obtained by dissolving a fluorine-containing compound such as monosodium ammonium difluoride with the aforementioned inorganic acid. Specifically, when an aluminum foil is used as the barrier layer 13, use of this acid degreasing agent is effective in terms of corrosion resistance, for its contribution to forming a fluoride of aluminum in a passive state, in addition to obtaining the effect of degreasing aluminum. The alkaline degreasing may be a method using sodium hydroxide or the like.

For example, the hydrothermal modification treatment may be a boehmite treatment of immersion-treating an aluminum foil in boiling water to which triethanolamine has been added. For example, the anodic oxidation treatment may be an alumite treatment.

The chemical conversion treatment may be of an immersion type or a coating type. The immersion type chemical conversion treatment may be, for example, chromate treatment, zirconium treatment, titanium treatment, vanadium treatment, molybdenum treatment, calcium phosphate treatment, strontium hydroxide treatment, cerium treatment, ruthenium treatment, or various chemical conversion treatments of mixed phases thereof. The coating type chemical conversion treatment may be a method of applying an anticorrosion coating agent onto the barrier layer 13.

Of these anticorrosion treatments, if at least part of the anticorrosion treatment layer is formed by any of hydrothermal modification treatment, anodization and chemical conversion treatment, degreasing treatment is preferably performed in advance. If a degreased metal foil, such as an annealed metal foil, is used as the barrier layer 13, the degreasing treatment is not necessary in forming the anticorrosion treatment layers 14a and 14b.

The coating agent used for the coating type chemical conversion treatment preferably contains trivalent chromium. The coating agent may contain at least one polymer selected from the group consisting of a cationic polymer and an anionic polymer to be described later.

Of the treatments mentioned above, the hydrothermal modification treatment and the anodic oxidation treatment, in particular, dissolve the surface of an aluminum foil with a treating agent and form an aluminum compound having good corrosion resistance (such as boehmite or alumite). Thus, these treatments form a co-continuous structure from the barrier layer 13 of an aluminum foil to the ant-corrosion treatment layers 14a and 14b, and fall within the definition of chemical conversion treatment. On the other hand, the anticorrosion treatment layers 14a and 14b can also be formed by only a pure coating method, which does not fall within the definition of chemical conversion treatment, as described later. For example, this coating method may be a method using a rare-earth oxide sol, such as cerium oxide with a mean particle size of 100 nm or less exhibiting an anticorrosion effect (inhibitor effect) for aluminum, as a material preferable in terms of environmental aspects. Use of this method makes it possible to impart an anticorrosion effect to a metal foil such as an aluminum foil even when using an ordinary coating method.

Examples of the rare-earth oxide sol include sols using various solvents such as an aqueous solvent, an alcohol-based solvent, a hydrocarbon-based solvent, a ketone-based solvent, an ester-based solvent, an ether-based solvent, and the like. Of these sols, an aqueous sol is preferable.

To stabilize a dispersion, the rare-earth oxide sol may contain, as a dispersion stabilizer, an inorganic acid such as nitric acid, hydrochloric acid, phosphoric acid, or the like or a salt thereof, or an organic acid such as acetic acid, malic acid, ascorbic acid, lactic acid, or the like. Of these dispersion stabilizers, phosphoric acid, in particular, is expected to impart the packaging material 10 with features of (1) stabilizing dispersion of the sol, (2) improving adhesion to the barrier layer 13 making use of an aluminum chelation ability of phosphoric acid, (3) imparting corrosion resistance by trapping aluminum ions (passive state formation), (4) improving cohesive force of the anticorrosion treatment layers 14a and 14b (oxide layers) by readily inducing dehydration condensation of phosphoric acid even at low temperature, and the like.

Since the anticorrosion treatment layers 14a and 14b formed of the rare-earth oxide sol is an aggregate of inorganic particles, the cohesive force of the layer itself may be lowered even after being dry-cured. Therefore, the anticorrosion treatment layers 14a and 14b in this case is preferably compounded with an anionic polymer or a cationic polymer to supplement the cohesive force.

The anticorrosion treatment layers 14a and 14b are not limited to the layers mentioned above. For example, they may be formed using a treating agent obtained by adding phosphoric acid and a chromium compound to a resin binder (such as aminophenol) as in a coating-type chromate based on known art. When this treating agent is used, the resultant layer will have both a corrosion-preventing function and adhesion. Although it is necessary to consider stability of a coating solution, a coating agent may be prepared in advance by integrating a rare-earth oxide sol with a polycationic polymer or a polyanionic polymer, and using this coating agent, the anticorrosion treatment layer may be formed being imparted with both the corrosion preventing function and adhesion.

Regardless of having a multilayer structure or a single layer structure, mass per unit area of the anticorrosion treatment layers 14a and 14b is preferably 0.005 $g/m^2$ to 0.200 g/m2, and more preferably 0.010 $g/m^2$ to 0.100 $g/m^2$. If the mass per unit area is 0.005 $g/m^2$ or larger, a corrosion prevention function is easily imparted to the barrier layer 13. Even if the mass per unit area exceeds 0.200 $g/m^2$, there is little change in the corrosion prevention function. If a rare-earth oxide sol is used, and the coating film is thick, heat-curing at the time of drying may be insufficient, and may decrease the cohesive force. It should be noted that the thickness of the anticorrosion treatment layers 14a and 14b can be converted from their specific gravity.

In order to facilitate maintaining the adhesion between the sealant layer 16 and the barrier layer 13, the anticorrosion treatment layers 14a and 14b may contain, for example, cerium oxide, 1 part by mass to 100 parts by mass of phosphoric acid or phosphate relative to 100 parts by mass of the cerium oxide, and a cationic polymer, or may be formed by applying a chemical conversion treatment to the barrier layer 13, or may contain a cationic polymer and be formed by applying a chemical conversion treatment to the barrier layer 13.

<Second Adhesive Layer>

The second adhesive layer 12b bonds the barrier layer 13 with the sealant layer 16. A general purpose adhesive for bonding the barrier layer 13 to the sealant layer 16 may be used for the second adhesive layer 12b.

If the second anticorrosion treatment layer 14b is provided on the barrier layer 13 and has a layer containing at least one polymer selected from the group consisting of the cationic polymers and the anionic polymers mentioned above, the second adhesive layer 12b preferably contains a compound having reactivity (hereinafter also referred to as a reactive compound) with the polymer mentioned above contained in the second anticorrosion treatment layer 14b.

For instance, where the second anticorrosion treatment layer 14b contains a cationic polymer, the second adhesive layer 12b contains a compound reactive with the cationic polymer. Likewise, where the second anticorrosion treatment layer 14b contains an anionic polymer, the second adhesive layer 12b contains a compound reactive with the anionic polymer. If the second anticorrosion treatment layer 14b contains both a cationic polymer and an anionic polymer, the second adhesive layer 12b may contain a compound having reactivity with the cationic polymer and a compound having reactivity with the anionic polymer. However, the second adhesive layer 12b does not necessarily need to contain the two kinds of compounds, but may contain a compound having reactivity with both of the cationic polymer and the anionic polymer. The expression "having reactivity" refers to forming a covalent bond with a cationic polymer or an anionic polymer. The second adhesive layer 12b may further contain an acid-modified polyolefin resin.

The compound having reactivity with the cationic polymer may be at least one compound selected from the group consisting of a polyfunctional isocyanate compound, a glycidyl compound, a compound having a carboxy group, and a compound having an oxazoline group.

The polyfunctional isocyanate compound, the glycidyl compound, the compound having a carboxy group, or the compound having an oxazoline group may be a polyfunctional isocyanate compound, a glycidyl compound, a compound having a carboxy group, a compound having an oxazoline group, or the like mentioned above, as a crosslinking agent for converting the cationic polymer into a crosslinked structure. In particular, a polyfunctional isocyanate compound is preferable from the perspective of having high reactivity with a cationic polymer and being readily formed into a crosslinked structure.

The compound having reactivity with the anionic polymer may be at least one compound selected from the group consisting of a glycidyl compound, and a compound having an oxazoline group. The glycidyl compound or the compound having an oxazoline group may be a glycidyl compound, a compound having an oxazoline group, or the like, mentioned above, as a crosslinking agent for converting the cationic polymer into a crosslinked structure. Of these compounds, the glycidyl compound is preferable from the perspective of having high reactivity with an anionic polymer.

If the second adhesive layer 12b contains an acid-modified polyolefin resin, it is preferable that the reactive compound is also reactive with the acidic group in the acid-modified polyolefin resin (i.e., forms a covalent bond with the acidic group). Thus, adhesion to the second anticorrosion treatment layer 14b is further enhanced. In addition, the acid-modified polyolefin resin is permitted to have a crosslinked structure to further improve solvent resistance of the packaging material 10.

The content of the reactive compound is preferably 1 to 10 equivalents relative to the acidic group in the acid-modified polyolefin resin. When the content of the reactive compound is 1 or more equivalents, the reactive compound sufficiently reacts with the acidic group in the acid-modified polyolefin resin. If the content of the reactive compound exceeds 10 equivalents, sufficient saturation is reached as a crosslinking reaction with the acid-modified polyolefin resin, and therefore unreacted substances may remain and thus various performances may deteriorate. Therefore, for example, the content of the reactive compound is preferably 5 to 20 parts by mass (solid content ratio) per 100 parts by mass of the acid-modified polyolefin resin.

The acid-modified polyolefin resin is obtained by introducing an acidic group into a polyolefin resin. Examples of the acidic group include a carboxy group, a sulfonic acid group, and an acid anhydride group. A maleic anhydride group and an (meth)acrylic acid group are particularly preferred. The acid-modified polyolefin resin may be, for example, similar to the modified polyolefin resin used for the sealant layer 16.

Various additives such as a flame retardant, slip agent, antiblocking agent, antioxidant, light stabilizer, tackifier, or the like may be added to the second adhesive layer 12b.

To reduce or prevent deterioration in lamination strength associated with an anticorrosion gas such as hydrogen sulfide or the electrolyte, and to further reduce or prevent deterioration in insulation performance, the second adhesive layer 12b may contain, for example, acid-modified polyolefin, and at least one curing agent selected from the group consisting of polyfunctional isocyanate compound, glycidyl compound, compound having a carboxy group, compound having an oxazoline group, and carbodiimide compound. Examples of the carbodiimide compound include N,N'-di-o-tolylcarbodiimide, N,N'-diphenylcarbodiimide, N,N'-di-2,6-dimethylphenylcarbodiimide, N,N'-bis(2,6-diisopropylphenyl)carbodiimide, N,N'-dioctyldecylcarbodiimide, N-tolyl-N'-cyclohexylcarbodiimide, N,N'-di-2,2-di-t-butylphenylcarbodiimide, N-triyl-N'-phenylcarbodiimide, N,N'-di-p-nitrophenylcarbodiimide, N,N'-di-p-aminophenylcarbodiimide, N,N'-di-p-hydroxyphenylcarbodiimide, N,N'-dicyclohexylcarbodiimide, and N,N'-di-p-tolylcarbodiimide.

The adhesive used for forming the second adhesive layer 12b may be, for example, a polyurethane-based adhesive obtained by adding polyester polyol containing hydrogenated dimer fatty acid and diol to polyisocyanate. Examples of adhesives include a polyurethane resin prepared by reacting a bifunctional or higher functional isocyanate compound with a main resin such as a polyester polyol, polyether polyol, acrylic polyol, carbonate polyol, or the like; and an epoxy resin prepared by reacting an amine compound with a main resin having an epoxy group. These materials are preferable in terms of heat resistance.

The thickness of the second adhesive layer 12b is not particularly limited, but from the perspective of obtaining a desired adhesive strength, processability and the like, the thickness is preferably in the range of 1 $\mu$m to 10 $\mu$m, and more preferably 2 $\mu$m to 7 $\mu$m.

<Sealant Layer 16>

The sealant layer 16 imparts sealing properties to the packaging material 10 when it is heat-sealed, and is located on the inner side when it is heat-sealed (thermally adhered) during assembly of the fully-solid-state battery.

The moisture content in the sealant layer 16 is 2700 ppm by mass or less. This suppresses the generation of air bubbles in the sealant layer during heat sealing as compared with when the moisture content in the sealant layer 16 exceeds 2700 ppm by mass.

The moisture content of the sealant layer 16 may be 2600 ppm by mass or less, 2500 ppm by mass or less, or 2200 ppm by mass or less. To further suppress the generation of air bubbles in the sealant layer 16 during heat sealing, the moisture content of the sealant layer 16 is preferably 2000 ppm by mass or less, more preferably 1500 ppm by mass or less. The moisture content of the sealant layer 16 may be 0 ppm by mass. The moisture content of the sealant layer 16 may be 200 ppm by mass or more, 300 ppm by mass or more, 400 ppm by mass or more, or 500 ppm by mass or more.

Note that it suffices if the moisture content of the sealant layer 16 as a whole is 2700 ppm by mass or less. That is, when the sealant layer 16 is a multilayer film, each layer may have a moisture content of 2700 ppm by mass or less, or one or more layers may have a moisture content of 2700 ppm by mass or less, and the remaining layers may have a moisture content higher than 2700 ppm by mass if the moisture content of the sealant layer 16 as a whole is 2700 ppm by mass or less.

The sealant layer 16 may be, for example, a film containing a thermoplastic resin such as polyolefin-based resin, polyester-based resin, polycarbonate resin, polyphenylene ether resin, polyacetal resin, polystyrene resin, polyvinyl chloride resin, or polyvinyl acetate resin. The suitability as a sealant and heat resistance of the sealant layer can be controlled by blending these various resins to form a polymer alloy. Among these, it is preferable to use a film containing polyolefin-based resin (hereinafter also referred to as a "polyolefin film") or a film containing polyester-based resin (hereinafter also referred to as a "polyester film"). In this case, the sealing performance with respect to the packaging material 10 is further improved. Moreover, since polyolefin films and polyester films have heat resistance, the packaging material 10 can further improve the heat resistance of the fully-solid-state battery. Note that the thermoplastic resin preferably does not contain a hydrophilic group component or only contains it in a small amount. This facilitates controlling the moisture content of the sealant layer 16 to 2700 ppm by mass or less because the thermoplastic resin adsorbs less moisture.

Examples of the polyolefin-based resin include polyolefin resins such as a low-, medium- or high-density polyethylene; an ethylene-a-olefin copolymer; polypropylene; a block or random copolymer containing propylene as a copolymerization component; and a propylene-a-olefin copolymer. The polyolefin resin may be an acid-modified polyolefin resin obtained by modifying a polyolefin resin with acid or glycidyl. When the polyolefin film is directly laminated onto the barrier layer 13 without using the anticorrosion treatment layer 14b and the second adhesive layer 12b, preferably, the polyolefin film contains an acid-modified polyolefin resin layer containing an acid-modified polyolefin resin, and this acid-modified polyolefin resin layer is directly laminated onto the barrier layer 13. In this case, since the acid-modified polyolefin resin layer of the polyolefin film is directly laminated onto the barrier layer 13, the sealant layer 16 takes in less moisture than when the acid-modified polyolefin resin layer of the polyolefin film and the barrier layer 13 are bonded with a polyurethane-based adhesive used as a high-temperature resistant adhesive. Therefore, even if the packaging material 10 is repeatedly exposed to high temperatures, moisture is less likely to be released from the sealant layer 16 each time. When the fully-solid-state battery contains a sulfide-based solid electrolyte as the solid electrolyte in the packaging bag, this suppresses the generation of hydrogen sulfide by the reaction between released moisture and sulfide.

Examples of polyester-based resins include polyethylene terephthalate (PET) resin, polybutylene terephthalate (PBT) resin, polyethylene naphthalate (PEN) resin, polybutylene naphthalate (PBN) resin, and copolymers thereof. These polyester-based resins may be used singly or in combination of two or more. It is also possible to use a copolymer of an acid and glycol.

To impart sealing properties, heat resistance, and other functions, the sealant layer 16 may also contain, for example, additives such as an antioxidant, a slip agent, a flame retardant, an anti-blocking agent, a light stabilizer, a dehydrating agent, a tackifier, a crystal nucleus, and a plasticizer.

The melting point of the sealant layer 16 is not particularly limited, but is preferably 150°C or higher, more preferably 155°C or higher, and even more preferably 160°C or higher. Since the melting point of the sealant layer 16 is 150°C or higher, it is possible to suppress the sealing strength of the packaging material 10 from decreasing even when the packaging material 10 is used in a high-temperature environment. When a fully-solid-state battery contains a sulfide-based solid electrolyte as the solid electrolyte in the packaging bag, and a gas such as hydrogen sulfide is generated from the reaction between moisture and the sulfide-based solid electrolyte in the packaging bag of the fully-solid-state battery, leakage of such gas can be suppressed.

The melting point of the sealant layer 16 is preferably 250°C or lower, more preferably 240°C or lower, even more preferably 230°C or lower. In this case, since the melting point of the sealant layer 16 is 250°C or lower, the heat-sealing temperature can be lowered. This further suppresses the generation of air bubbles in the sealant layer 16 during heat sealing. Therefore, decreases in the seal strength and the barrier performance of the packaging material 10 can be further suppressed. This allows the packaging material 10 to maintain the sealing of the packaging bag of the fully-solid-state battery tight enough. The packaging material 10 can also suppress entry of moisture through the packaging material 10.

The sealant layer 16 may be a single-layer film or a multilayer film, and may be suitably selected according to the functions needed. When the sealant layer 16 is a multilayer film, the layers may be laminated by coextrusion or dry lamination. However, when the sealant layer 16 is a multilayer film, it is preferable to use the same kind of resin in order to obtain good interlayer adhesion. For example, a layer containing a modified polyolefin-based resin may be provided as the layer coming into contact with the barrier layer 13, and a single layer of unmodified polyolefin-based resin layer may be extruded or multiple polyolefin-based resin layers may be coextruded on top of the first layer to form a laminate.

The thickness of the sealant layer 16 is not particularly limited, but is preferably 10 $\mu$m to 100 $\mu$m, and more preferably 20 $\mu$m to 60 $\mu$m. When the thickness of the sealant layer 16 is 10 $\mu$m or greater, good sealing strength can be obtained. When the thickness of the sealant layer 16 to 100 $\mu$m or less, the amount of water vapor that enters from the peripheral part of the packaging material 10 can be reduced.

<Hydrogen Sulfide Decomposition or Adsorption Material>

When the packaging material 10 is used for fully-solid-state battery having a sulfide-based solid electrolyte, at least one of the layers forming the packaging material 10 of this embodiment may contain a hydrogen sulfide decomposition or adsorption material that decomposes or adsorbs hydrogen sulfide. In this case, even if water and the sulfide-based solid electrolyte react to generate hydrogen sulfide in the fully-solid-state battery, the permeation of the hydrogen sulfide through the packaging material 10 is suppressed. The hydrogen sulfide decomposition or adsorption material is contained, for example, in the first adhesive layer 12a, the second adhesive layer 12b, the sealant layer 16, or at least one of these layers. In particular, the hydrogen sulfide decomposition or adsorption material is preferably included in the sealant layer 16. In this case, permeation of hydrogen sulfide through the packaging material 10 can be effectively suppressed.

Examples of hydrogen sulfide decomposition or adsorption materials include zinc oxide, amorphous metal silicate (mainly those whose metal is copper or zinc), hydrates of zirconium and tanthanoid, tetravalent metal phosphates (especially those whose metal is copper), mixtures of zeolite and zinc ions, mixtures of zeolite, zinc oxide, and copper(II) oxide, potassium permanganate, sodium permanganate, silver sulfate, silver acetate, aluminum oxide, iron hydroxide, isocyanate compounds, aluminum silicate, potassium aluminum sulfate, zeolite, activated carbon, amine compounds, and ionomers. The hydrogen sulfide decomposition or adsorption material preferably contains zinc oxide (ZnO) and/or zinc ions because such materials facilitate detoxifying hydrogen sulfide, are cost effective, and can be easily handled. These hydrogen sulfide decomposition or adsorption materials may be used singly or in combination of two or more.

The hydrogen sulfide decomposition or adsorption material may be a deodorizing agent having a deodorizing effect on hydrogen sulfide like the following materials. Specific examples include "Daimushu PE-M 3000-Z" (polyethylene masterbatch product) manufactured by Dainichiseika Color & Chemicals Mfg. Co., Ltd., "Kesmon" manufactured by Toagosei Co., Ltd., and "SHU-CLEANSE" manufactured by Rasa Industries, Ltd., and "Dushlite ZU" and "Dushlite CZU" manufactured by Sinanen Zeomic Co., Ltd.

A metal soap such as zinc stearate may be added to the layer containing the hydrogen sulfide decomposition or adsorption material for improving dispersion of the hydrogen sulfide decomposition or adsorption material. By using the hydrogen sulfide decomposition or adsorption material together with a metal soap, it is possible to improve the dispersion of the hydrogen sulfide decomposition or adsorption material in the layer. As a result, the effect of detoxifying hydrogen sulfide can be obtained more uniformly, and decreases in the functions (for example, adhesion, sealing strength, and the like) of the layer containing the hydrogen sulfide decomposition and adsorption material can be more easily suppressed.

The hydrogen sulfide decomposition or adsorption material may be used in the form of a masterbatch prepared in advance.

In the case the hydrogen sulfide decomposition or adsorption material is to be mixed into the sealant layer 16, a high-concentration product for mixture may be prepared in advance as a masterbatch, and then mixed with the resin of the sealant layer 16 so that an appropriate concentration is obtained.

In the case the hydrogen sulfide decomposition or adsorption material is to be mixed into the first or second adhesive layer 12a or 12b, it may be directly mixed into the first or second adhesive layer 12a or 12b if the first or second adhesive layer 12a or 12b is to be coated. If the first or second adhesive layer 12a or 12b is to be formed by extrusion or the like, a masterbatch may be prepared as with the above sealant layer 16 and mixed into the first or second adhesive layer 12a or 12b. In the case a masterbatch is prepared, the resin may be a thermoplastic resin such as polyolefin-based resin, polyamide resin, polyester-based resin, polycarbonate resin, polyphenylene ether resin, polyacetal resin, polystyrene resin, polyvinyl chloride resin, or polyvinyl acetate resin.

The content of the hydrogen sulfide decomposition or adsorption material in the layer containing the hydrogen sulfide decomposition or adsorption material may be 0.01 mass% or more and 30 mass% or less, 0.05 mass% or more and 20 mass% or less, or 0.1 mass% or more and 15 mass% or less based on the total amount of the layer. When the content of the hydrogen sulfide decomposition or adsorption material is equal to or higher than the above lower limit, the effect of detoxifying hydrogen sulfide can be sufficiently obtained, and when it is equal to or lower than the above upper limit, it is possible to suppress decreases in the functions (for example, adhesion, sealing strength, and the like) of the layer containing the hydrogen sulfide decomposition or adsorption material.

Preferred embodiments of the fully-solid-state battery packaging material according to the present embodiment have been described in detail above, but the present disclosure is not limited to those specific embodiments.

For example, although Fig. 1 shows a case where the anticorrosion treatment layers 14a and 14b are provided on respective sides of the barrier layer 13, it is also possible that only one of the anticorrosion treatment layers 14a and 14b is provided or no anticorrosion treatment layer is provided.

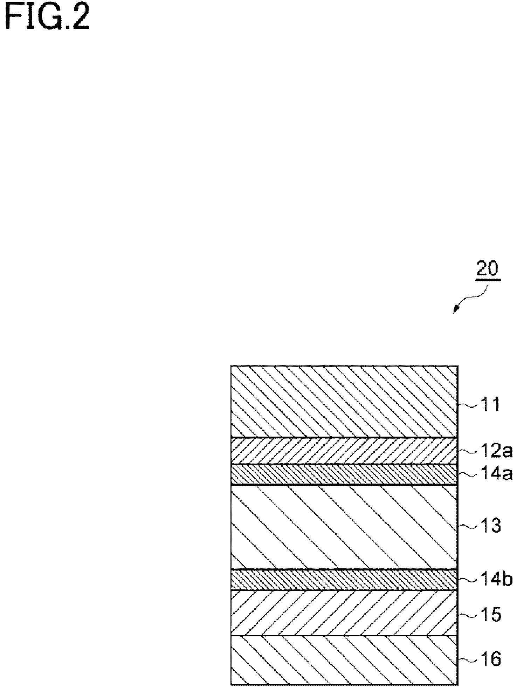

Although Fig. 1 shows a case in which the barrier layer 13 is laminated with the sealant layer 16 using the second adhesive resin layer 12b, the barrier layer 13 may be laminated with the sealant layer 16 using an adhesive resin layer 15 as in an fully-solid-state battery packaging material 20 shown in Fig. 2. Further, in the fully-solid-state battery packaging material 20 shown in Fig. 2, the second adhesive layer 12b may be provided between the barrier layer 13 and the adhesive resin layer 15.

<Adhesive Resin Layer 15>

The adhesive resin layer 15 is substantially comprised of an adhesive resin composition as the main component and additive components in accordance with need. The adhesive resin composition is not particularly limited, but preferably contains a modified polyolefin resin.

The modified polyolefin resin is preferably a polyolefin resin that is graft-modified by an unsaturated carboxylic acid derivative derived from one of an unsaturated carboxylic acid, and acid anhydride and ester thereof.

Examples of polyolefin resins include low density polyethylene, medium density polyethylene, high density polyethylene, ethylene-a-olefin copolymers, homopolypropylene, blocked polypropylene, random polypropylene, and propylene-a-olefin copolymers.

The modified polyolefin resin is preferably a maleic anhydride-modified polyolefin resin. For example, "Admer" manufactured by Mitsui Chemicals Corporation, "Modic" manufactured by Mitsubishi Chemical Corporation, and the like are suitable modified polyolefin resins. These modified polyolefin resins exhibit good reactivity with polymers having various metals or various functional groups, which allows them to impart adhesiveness to the adhesive resin layer 15 using this reactivity. In addition, the adhesive resin layer 15 may contain one or more of various compatible and incompatible elastomers, flame retardants, slip agents, anti-blocking agents, antioxidants, light stabilizers, tackifiers, and other various additives as necessary.

The thickness of the adhesive resin layer 15 is not specifically limited, but is preferably the same or less than that of the sealant layer 16 from the viewpoints of stress relaxation and moisture permeability.

In addition, in the solid-state battery packaging material 20, the total thickness of the adhesive resin layer 15 and the sealant layer 16 is preferably within the range of 5 to 100 $\mu$m, more preferably within the range of 20 to 80 $\mu$m to achieve both a thin film and improved heat sealing strength under high temperature environmental conditions.

In the packaging material 20, the hydrogen sulfide decomposition or adsorption material may be contained in the adhesive resin layer 15. In the packaging material 20, the hydrogen sulfide decomposition or adsorption material may be contained in at least one layer selected from the group consisting of the first adhesive layer 12a, the adhesive resin layer 15, and the sealant layer 16.

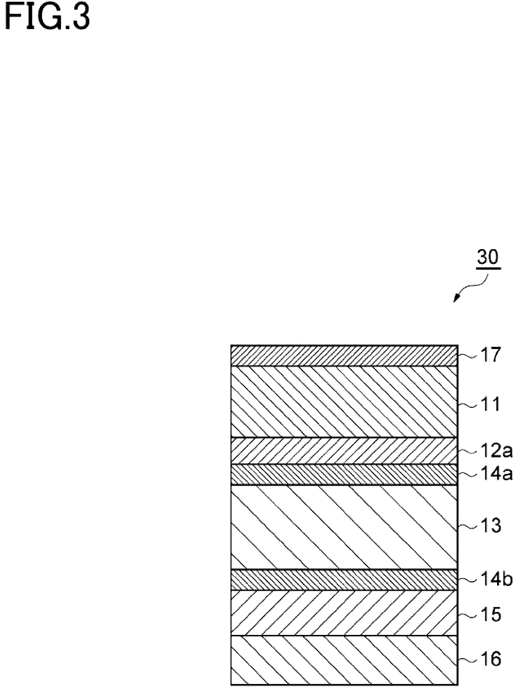

Like a solid-state battery packaging material 30 shown in Fig. 3, the packaging material of the present disclosure may further include a protective layer 17 disposed on the surface of the substrate layer 11 opposite to the barrier layer 13 side. Note that the adhesive resin layer 15 in Fig. 3 may be the second adhesive layer 12b.

<Protective Layer 17>

The protective layer 17 is a layer that protects the substrate layer 11. Materials similar to those that can be used to form the first adhesive layer 12a can be used to form the protective layer 17. The protective layer 17 can be formed on the substrate layer 11 by coating or the like.

In the packaging material 30, the hydrogen sulfide decomposition or adsorption material may be contained in the protective layer 17. In the packaging material 30, the hydrogen sulfide decomposition or adsorption material may be contained in at least one layer selected from the group consisting of the protective layer 17, the first adhesive layer 12a, the adhesive resin layer 15, and the sealant layer 16.

[Method of Producing Packaging Material]

Next, an example of a method of producing the packaging material 10 shown in Fig. 1 will be described. The method of producing the packaging material 10 should not be limited to the methods described below.

In general, the method of producing the packaging material 10 of the present embodiment includes a step of providing the barrier layer 13 with the anticorrosion treatment layers 14a and 14b, a step of bonding the substrate layer 11 and the barrier layer 13 using the first adhesive layer 12a, a step of preparing a laminate by further laminating the sealant layer 16 thereon via the second adhesive layer 12b, and, if necessary, a step of aging the resultant laminate.

(Step of Laminating Anticorrosion Treatment Layers on Barrier Layer)

In the present step, the anticorrosion treatment layers 14a and 14b are formed on the barrier layer 13. As described above, the method may include applying a degreasing treatment, hydrothermal modification treatment, anodic oxidation treatment, or chemical conversion treatment to the barrier layer 13, or applying an anticorrosion coating agent onto the barrier layer 13.

If the anticorrosion treatment layer 14a or 14b includes multiple layers, for example, a coating liquid (coating agent) that serves as a lower layer-side (barrier layer 13-side) anticorrosion treatment layer may be applied to the barrier layer 13, followed by baking to form a first layer, and then, a coating liquid (coating agent) that serves as an upper layer-side anticorrosion treatment layer may be applied to the first layer, followed by baking to form a second layer.

The degreasing may be carried out by spraying or immersion. The hydrothermal conversion treatment and anodic oxidation treatment may be performed by immersion. As for the chemical conversion treatment, immersion, spraying, coating, or the like can be selected depending on the type of chemical conversion treatment.

Various methods such as gravure coating, reverse coating, roll coating or bar coating may be used as the method of applying the coating agent having corrosion prevention performance.

As stated above, such a variety of treatments may be carried out on both surfaces or one surface of the metal foil. With the one-surface treatment, a surface to be treated is preferably at a side on which the sealant layer 16 is to be laminated. If needed, the treatment mentioned above may also be applied to the surface of the substrate layer 11.

Further, the coating weight of the coating agents for forming the first and second layers is preferably 0.005 to 0.200 $g/m^2$, and more preferably 0.010 to 0.100 $g/m^2$.

If necessary, dry curing may be carried out within a base material temperature range of 60°C to 300°C depending on the drying conditions of the anticorrosion treatment layers 14a and 14b used.

(Step of Bonding Substrate Layer and Barrier Layer)

In the present step, the barrier layer 13 provided with the anticorrosion treatment layers 14a and 14b is bonded to the substrate layer 11 via the first adhesive layer 12a. The bonding method uses a technique such as dry lamination, non-solvent lamination or wet lamination, and bonds the two layers using the material forming the aforementioned first adhesive layer 12a. The first adhesive layer 12a is provided in a dry coating weight in the range of 1 to 10 $g/m^2$, and more preferably a coating weight in the range of 2 to 7 $g/m^2$.

(Step of Laminating Second Adhesive Layer and Sealant Layer)

In the present step, the sealant layer 16 is bonded to the anticorrosion treatment layer 14b-side of the barrier layer 13 via the second adhesive layer 12b. The bonding method may be wet processing, dry lamination, or the like.

If wet processing is used, a solution or a dispersion of the adhesive forming the second adhesive layer 12b is applied onto the second anticorrosion treatment layer 14b, and the solvent is vaporized at a predetermined temperature, followed by drying to thereby form a film. Further, baking may follow if necessary. Then, the sealant layer 16 is laminated thereon, thereby preparing the packaging material 10. The coating method may be any of the various coating methods mentioned above. The preferred dry coating weight of the second adhesive layer 12b is similar to that of the first adhesive layer 12a.

In this case, for example, the sealant layer 16 can be formed with a melt extrusion molding machine using a resin composition for forming a sealant layer containing the constituent components of the sealant layer 16 described above. The processing speed of the melt extrusion molding machine can be 80 m/min or higher in consideration of productivity.

(Step of Aging)

In the present step, the laminate is aged (cured). Aging of the laminate can expedite adhesion between the barrier layer 13 / the second anticorrosion treatment layer 14b / the second adhesive layer 12b / the sealant layer 16. Aging may be conducted in the range of room temperature to 100°C. Aging time is 1 to 10 days, for example.

In this manner, the packaging material 10 of the present embodiment as shown in Fig. 1 can be prepared.

Next, an example of a method of producing the packaging material 20 shown in Fig. 2 will be described. The method of producing the packaging material 20 is not limited to the following one.

The method for manufacturing the packaging material 20 of the present embodiment roughly includes a step of providing the barrier layer 13 with the anticorrosion treatment layers 14a and 14b, a step of bonding the substrate layer 11 with the barrier layer 13 using the first adhesive layer 12a, a step of further laminating the adhesive resin layer 15 and the sealant layer 16 thereon to produce a laminate, and a step of heat treating the obtained laminate in accordance with need. Steps up to the step of bonding the substrate layer 11 and the barrier layer 13 can be performed in the same manner as in the method of producing the packaging material 10.

(Step of Laminating Adhesive Resin Layer and Sealant Layer)

In the present step, the adhesive resin layer 15 and the sealant layer 16 are formed on the second anticorrosion treatment layer 14b that has been formed in the previous steps. The method includes using an extrusion laminator to sandwich-laminate the adhesive resin layer 15 and the sealant layer 16 together. Furthermore, it is possible to laminate by a tandem lamination method or a co-extrusion method which extrudes the adhesive resin layer 15 with the sealant layer 16. In the formation of the adhesive resin layer 15 and the sealant layer 16, for example, the components are blended so as to satisfy the above-described configurations of the adhesive resin layer 15 and the sealant layer 16. The above-described resin composition for forming the sealant layer is used to form the sealant layer 16.

As shown in Fig. 2, through this step, a laminate can be obtained in which the substrate layer 11 / the first adhesive layer 12a / the first anticorrosion treatment layer 14a / the barrier layer 13 / the second anticorrosion treatment layer 14b / the adhesive resin layer 15 / the sealant layer 16 are laminated in this order.

Note that the adhesive resin layer 15 may be laminated by using an extrusion laminator to directly extrude materials that have been dry-blended so as to have the above material blending composition. Alternatively, the adhesive resin layer 15 may be laminated by first melt-blending the materials using a melt-mixing device such as a single-screw extruder, twin-screw extruder, or Brabender mixer and granulating them in advance, and then extruding the granules using an extrusion laminator.

The sealant layer 16 may be laminated by using an extrusion laminator to directly extrude materials dry-blended so as to have the above material composition as constituent components of the resin composition for forming the sealant layer. Alternatively, the adhesive resin layer 15 and the sealant layer 16 may be laminated by first melt-blending the materials using a melt-mixing device such as a single-screw extruder, twin-screw extruder, or Brabender mixer and granulating them in advance, and then tandem-laminating or co-extruding the adhesive resin layer 15 and the sealant layer 16 by extruding them with an extrusion laminator. Moreover, a sealant monolayer film may be formed in advance as a cast film using a resin composition for forming a sealant layer, and the film may be laminated by sandwich-lamination together with an adhesive resin. In consideration of productivity, the formation speed (processing speed) of the adhesive resin layer 15 and the sealant layer 16 can be, for example, 80 m/min or higher.

(Step of Heating)

In the present step, the laminate is heat-treated. Heat treatment of the laminate can improve adhesion between the barrier layer 13 / the second anticorrosion treatment layer 14b / the adhesive resin layer 15 / the sealant layer 16. The heat treatment is preferably carried out at a temperature that is equal to or higher than the melting point of at least the adhesive resin layer 15.

In this manner, the packaging material 20 of the present embodiment as shown in Fig. 2 can be prepared.

[Fully-Solid-State Battery]

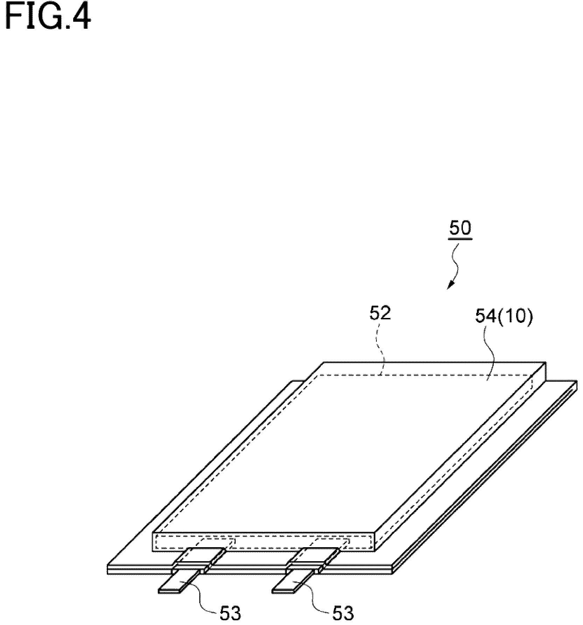

Fig. 4 is a perspective view showing an embodiment of a fully-solid-state battery produced using the above-described packaging material 10. As shown in Fig. 4, a fully-solid battery 50 includes a battery body 52 having a sulfide electrolyte as a solid electrolyte, two metal terminals (current extraction terminals) 53 for extracting current from the battery body 52 to the outside. and a packaging bag 54 that hermetically seals the battery body 52. The packaging bag 54 is obtained by heat-sealing the packaging material 10 according to the present embodiment described above, and is used as a container for accommodating the battery body 52. In the packaging material 10, the substrate layer 11 is the outermost layer and the sealant layer 16 is the innermost layer. That is, the packaging material 10 is configured to contain the battery body 52 therein by folding a single laminate film in half so that the substrate layer 11 is on the outside of the fully-solid-state battery 50 and the sealant layer 16 is on the inside of the fully-solid-state battery 50, and heat-fusing the peripheral edges, or stacking two laminate films and heat-fusing their peripheral edges. The metal terminals 53 are sandwiched and held by the packaging bag 54 with the sealant layer 16 on the inside. The metal terminals 53 may be sandwiched and held by the packaging bag 54 via a tab sealant.

The battery body 52 has at least one power generation element including a positive electrode, a solid electrolyte, and a negative electrode. The metal terminals 53 are each part of a current collector extended to the outside of the packaging material 10, and is made of metal foil such as copper foil or aluminum foil.

According to the fully-solid-state battery 50, the packaging bag 54 is obtained by heat-sealing the packaging material 10. According to the packaging material 10, generation of air bubbles in the sealant layer 16 can be suppressed during heat sealing. Therefore, according to the fully-solid-state battery 50, it is possible to suppress rough parts and dense parts being created in the sealant layer 16 of the packaging material 10, and the sealing strength decreasing in the rough parts. Consequently, even if the use of the fully-solid-state battery 50 in a high-temperature environment causes the battery body 52 to swell and a force is exerted on the packaging bag 54 to open it, the fully-solid-state battery 50 can keep the packaging bag 54 hermetically sealed using the packaging material 10. Even if hydrogen sulfide is generated in the packaging bag 54, leakage of the hydrogen sulfide from the packaging bag 54 is suppressed. Further, since the generation of air bubbles in the sealant layer 16 that tend to provide passages for moisture is suppressed, entry of moisture from the outside of the packaging material 10 is suppressed. This suppresses generation of hydrogen sulfide by the reaction between moisture and a sulfide electrolyte.

Note that the packaging bag 54 of the fully-solid-state battery 50 may be obtained by heat-sealing the packaging material 20 or 30 instead of the packaging material 10. The solid electrolyte is not limited to a sulfide solid electrolyte, and may be an oxide solid electrolyte or the like.

[Examples]

In the following, the present disclosure will be described in more detail by way of examples. However, the present disclosure should not be limited to the following examples.

<Materials Used>

Materials used in examples and comparative example are set forth below.

(Substrate Layer)

The following film was used as the substrate layer.
Semi-aromatic polyamide (nylon 9T) film (manufactured by UNITIKA LTD. and having a melting point of 305°C)

(First Adhesive Layer)

As the first adhesive layer, a polyurethane-based adhesive (manufactured by Toyo Ink Co., Ltd.) was used containing a polyester polyol-based main resin to which a tolylene diisocyanate adduct curing agent was added.

(First and Second Anticorrosion Treatment Layers)

The first anticorrosion treatment layer (on the substrate layer side) and the second anticorrosion treatment layer (on the sealant layer side) were formed using the following (CL-1) and (CL-2).

(CL-1): A sodium polyphosphate stabilized cerium oxide sol adjusted to have a solid content concentration of 10 mass% by using distilled water as a solvent. It should be noted that the sodium polyphosphate stabilized cerium oxide sol was obtained by formulating 10 parts by mass of Na salt of phosphoric acid per 100 parts by mass of cerium oxide. (CL-2): A composition adjusted to have a solid content of 5 mass% by using distilled water as a solvent. In the composition, the ratio of "polyallylamine (manufactured by Nitto Boseki Co., Ltd.)" to "polyglycerol polyglycidyl ether (manufactured by Nagase ChemteX Corporation)" was 90:10 (mass ratio).

(Barrier Layer)

An annealed and degreased soft aluminum foil (manufactured by Toyo Aluminium K.K., product name: 8079, thickness: 40 $\mu$m) was used as the barrier layer.

(Second Adhesive Layer)

The same polyurethane-based adhesive (manufactured by Toyo Ink Co., Ltd., product name: TM-K55) as the first adhesive layer was used as the second adhesive layer.

(Sealant Layer)

The following films were used as sealant layers.

- Polyolefin film 1 (PO Film 1, a polypropylene-polyethylene random copolymer manufactured by FUTAMURA CHEMICAL CO., LTD., product name: FHK2, thickness: 40 $\mu$m, melting point: 135°C, moisture content: 516 ppm by mass)
- Polyolefin film 2 (PO Film 2, laminate of acid-modified polypropylene (thickness: 12.5 $\mu$m, melting point: 160°C) and polypropylene (thickness: 12.5 $\mu$m, melting point: 160°C) (melting point: 160°C, thickness: 25 $\mu$m), moisture content: 546 ppm by mass)
- Polyester film 1 (polyethylene terephthalate manufactured by UNITIKA LTD., product name: Emblet, thickness: 25 $\mu$m, melting point: 257°C, moisture content: 2682 ppm by mass)
- Polyester film 2 (polyethylene naphthalate manufactured by Toyobo CO., LTD., product name: TEONEX, thickness: 25 $\mu$m, melting point: 265°C, moisture content: 2637 ppm by mass)
- Polyester film 3 (copolymer of a plurality of kinds of polyethylene terephthalate manufactured by UNITIKA LTD., thickness: 25 $\mu$m, melting point: 210°C, moisture content: 1648 ppm by mass)
- Polyamide film (PA film, nylon 6, manufactured by TOYOBO CO., LTD., product name: HARDEN N1102, thickness: 25 $\mu$m, melting point: 225°C, and moisture content: 23729 ppm by mass)

The moisture content was calculated as follows.

That is, after cutting the film into 10 cm squares and leaving it in an environment of 23°C / 50% RH for two days, the cut film was heated using a moisture vaporizer (manufactured by HIRANUMA Co., Ltd., product name: EV-2000) set at 300°C, and the amount of moisture generated was measured using a trace moisture measuring device (Karl Fischer: "AQ-2100" manufactured by HIRANUMA Co., Ltd.). Dry $N_2$ gas was used as a carrier gas. Then, using the amount of moisture measured as described above, the moisture content was calculated based on the following equation.

$$\text{Moisture content (ppm by mass)} = \text{measured moisture content (g)} / \text{mass of film (g)}$$

(Examples 1 to 4)

First, the first and second anticorrosion treatment layers were provided on the barrier layer through the following procedures. Namely, first, (CL-1) was applied on both sides of the barrier layer by micro gravure coating so that the dry coating weight becomes 70 mg/m$^2$, and subjected to baking treatment at 200°C in a drying unit. Next, (CL-2) was applied onto the obtained layer by microgravure coating so that the dry coating weight became 20 mg/m$^2$. A composite layer including (CL-1) and (CL-2) was thus formed on each side of the barrier layer as the first and second anticorrosion treatment layers to obtain a first laminate. These composite layers developed the anticorrosion performance by compounding two materials (CL-1) and (CL-2).

Then, the first anticorrosion treatment layer side of the barrier layer provided with the first and second anticorrosion treatment layers (the first laminate) was dry-laminated with the substrate layer using a polyurethane-based adhesive (the first adhesive layer). Specifically, a polyurethane-based adhesive was applied to the surface of the barrier layer on the first anticorrosion treatment layer side so that the coating has a thickness of 5 $\mu$m after curing. After drying it at 80°C for 1 minute, it was laminated with the substrate layer, and aging at 60°C for 120 hours to obtain a second laminate.

The laminate (second laminate) including the barrier layer and the substrate layer was set in the unwinding part of the extrusion laminator, and a sealant layer of the corresponding type shown in Table 1 was bonded onto the second anticorrosion treatment layer by dry lamination using a polyurethane-based adhesive (second adhesive layer). Specifically, the structure was obtained by applying a polyurethane-based adhesive to the surface of the barrier layer on the second anticorrosion treatment layer side so that the thickness after curing would be 5 μm. After drying at 80°C for 1 minute, it was laminated with a sealant layer of the corresponding type shown in Table 1, and aged at 60°C for 120 hours.

The packaging material was thus obtained (a laminate of the substrate layer / first adhesive layer / first anticorrosion treatment layer / barrier layer / second anticorrosion treatment layer / second adhesive layer / sealant layer).

(Example 5)

A packaging material (a laminate of the substrate layer / first adhesive layer / first anticorrosion treatment layer / barrier layer / second anticorrosion treatment layer / sealant layer) was prepared in the same manner as in Example 1 except that a laminate of the barrier layer and the substrate layer was set in the unwinding part of the extrusion laminator, and a sealant layer of the corresponding type shown in Table 1 was bonded onto the second anticorrosion treatment layer by heat lamination to obtain a structure. The heat lamination of the second laminate including the barrier layer and the substrate layer with the sealant layer was carried out at a temperature of 190°C and a pressure of 0.5 MPa.

(Comparative Example 1)

A packaging material (a laminate of the substrate layer / first adhesive layer / first anticorrosion treatment layer / barrier layer / second anticorrosion treatment layer / second adhesive layer / sealant layer) was prepared in the same manner as in Example 1 except that a sealant layer of the corresponding type shown in Table 1 was used as the sealant layer.

<Evaluation of Packaging Materials>

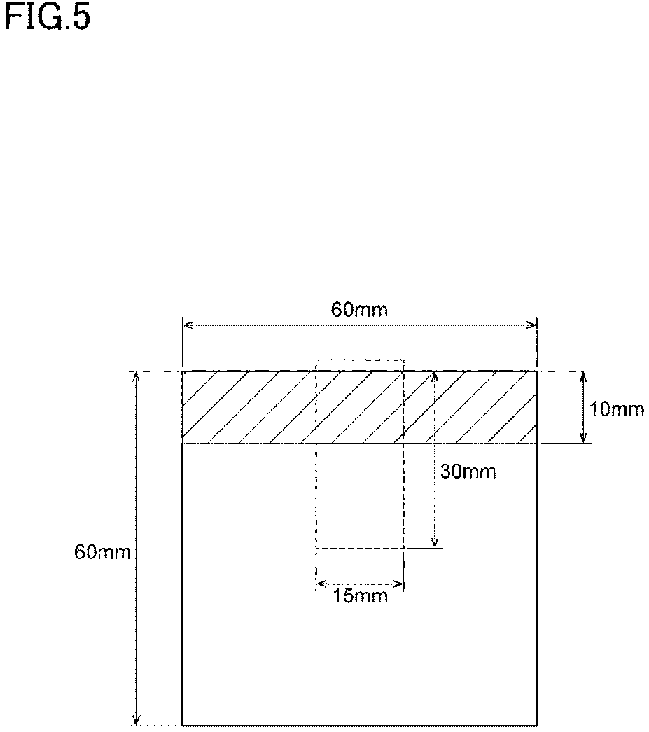

Each packaging material was cut to a size of 120 mm x 60 mm. The cut packaging material was folded in half so that the sealant layer was on the inside and both longitudinal edges of one half of the cut packaging material overlapped the longitudinal edges of the other half. These longitudinal edges were heat-sealed by pressing at a pressure of 0.5 MPa for 3 seconds at a temperature of the melting point of the sealant layer + 20°C to form a heat-sealed part (the shaded part in Fig. 5) with a width of 10 mm. A structure was thus prepared. After that, the structure was stored at room temperature for 12 hours. An evaluation sample was prepared by cutting out a 15 mm x 30 mm piece from the longitudinally central part of the heat-sealed part of the structure (see Fig. 5). Then, this evaluation sample was separated into two separate pieces at the heat-sealed part. Then, the sealant layers of the separated pieces were visually observed to evaluate the generation of air bubbles in the sealant layer based on the following criteria. The results are shown in Table 1. Note that when the sealant layer is a multilayer film, the "melting point of the sealant layer" is defined as the melting point of the layer having the lowest melting point among the layers constituting the multilayer film.

(Evaluation Criteria)

Excellent: No air bubble generation observed
Good: Local air bubble generation observed
Poor: Generation of air bubbles observed throughout

[Table 1]

| | | Sealant layer | | | | | Packaging material rating |
|---|---|---|---|---|---|---|---|
| | | Type | Thickness (μm) | Melting point (°C) | Moisture content (mass ppm) | Bonding with barrier layer | Generation of bubbles in sealant layer |
| Ex. 1 | | PO film 1 | 40 | 135 | 516 | Dry lamination with adhesive | Excellent |
| Ex. 2 | | Polyester film 1 | 25 | 257 | 2682 | Dry lamination with adhesive | Good |
| Ex. 3 | | Polyester film 2 | 25 | 265 | 2637 | Dry lamination with adhesive | Good |
| Ex. 4 | | Polyester film 3 | 25 | 210 | 1648 | Dry lamination with adhesive | Excellent |
| Ex. 5 | | PO film 2 | 25 | 160 | 546 | Heat lamination | Excellent |
| Comp. Ex. 1 | | PA film | 25 | 225 | 23729 | Dry lamination with adhesive | Poor |

It can be seen from the results shown in Table 1 that the packaging materials of Examples 1 to 6 with a moisture content of 2700 ppm by mass or less better suppressed the generation of air bubbles than the packaging material of Comparative Example 1 with a moisture content of more than 2700 ppm by mass.

This shows that the fully-solid-state battery packaging material of the present disclosure can suppress generation of air bubbles during heat sealing.

[Reference Signs List]

| | |
|---|---|
| 10, 20, 30 | Fully-solid-state packaging material |
| 11 | Substrate layer |
| 12a | First adhesive layer |
| 12b | Second adhesive layer |
| 13 | Barrier layer |
| 14a | First anticorrosion treatment layer |
| 14b | Second anticorrosion treatment layer |
| 15 | Adhesive resin layer |
| 16 | Sealant layer |
| 17 | Protective layer |
| 50 | Fully-solid-state battery |
| 52 | Battery body |
| 53 | Metal terminal |
| 54 | Packaging material |

**Claims**

1. A fully-solid-state battery packaging material comprising at least a substrate layer, a barrier layer, and a sealant layer in this order, wherein
moisture content of the sealant layer is 2700 ppm by mass or less.

2. The fully-solid-state battery packaging material according to claim 1, wherein
the moisture content of the sealant layer is 2000 ppm by mass or less.

3. The fully-solid-state battery packaging material according to claim 1 or 2, wherein
the moisture content of the sealant layer is 200 ppm by mass or more.

4. The fully-solid-state battery packaging material according to any one of claims 1 to 3, wherein the sealant layer is a polyolefin film containing a polyolefin-based resin or a polyester film containing a polyester-based resin.

5. The fully-solid-state battery packaging material according to claim 4, wherein

the sealant layer is the polyolefin film,
the polyolefin film contains an acid-modified polyolefin resin layer, and
the acid-modified polyolefin resin layer is directly laminated to the barrier layer.

6. The fully-solid-state battery packaging material according to any one of claims 1 to 5, wherein the sealant layer has a melting point of 250°C or lower.

7. The fully-solid-state battery packaging material according to any one of claims 1 to 6, wherein the sealant layer has a melting point of 150°C or higher.

8. A fully-solid-state battery comprising:

a battery body containing a solid electrolyte; and
a packaging bag that accommodates the battery body, wherein
the packaging bag is obtained by heat-sealing the fully-solid state battery packaging material according to any one of claims 1 to 7.

9. The fully-solid-state battery according to claim 8, wherein the solid electrolyte is a sulfide-based solid electrolyte.

FIG.1

# FIG.2

# FIG.3

# FIG.4

# FIG.5

## INTERNATIONAL SEARCH REPORT

| International application No. |
|---|
| **PCT/JP2023/003263** |

**A. CLASSIFICATION OF SUBJECT MATTER**

**H01M 50/129**(2021.01)i; **H01M 10/0562**(2010.01)i; **H01M 50/105**(2021.01)i
FI:   H01M50/129; H01M10/0562; H01M50/105

According to International Patent Classification (IPC) or to both national classification and IPC

**B. FIELDS SEARCHED**

Minimum documentation searched (classification system followed by classification symbols)

H01M50/129; H01M10/0562; H01M50/105

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-152993 A (TOPPAN PRINTING CO., LTD.) 30 September 2021 (2021-09-30) paragraphs [0005]-[0008], [0021], [0022], [0083]-[0086], [0115]-[0117], fig. 1-3 | 1-9 |
| A | JP 2009-32539 A (TOYOTA MOTOR CORP.) 12 February 2009 (2009-02-12) claims 1-3, paragraphs [0024], [0025], [0028], [0029], [0035], fig. 2 | 1-9 |
| A | JP 2012-178256 A (TOYOTA MOTOR CORP.) 13 September 2012 (2012-09-13) entire text, paragraphs [0024]-[0026], [0028], [0034] | 1-9 |
| A | JP 2016-62712 A (TOYOTA MOTOR CORP.) 25 April 2016 (2016-04-25) entire text, claim 1, paragraphs [0002]-[0004], [0016], [0017], [0021], [0025]-[0027], fig. 1-3 | 1-9 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **06 April 2023** | **18 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/003263**

| Patent document cited in search report | | | Publication date (day/month/year) | Patent family member(s) | Publication date (day/month/year) |
|---|---|---|---|---|---|
| JP | 2021-152993 | A | 30 September 2021 | US 2022/0328911 A1<br>paragraphs [0006]-[0013],<br>[0069]-[0073], [0201]-[0203],<br>[0212], [0213], [0259]-[0262],<br>fig. 1, 2, 4<br>WO 2021/131865 A1<br>EP 4084192 A1<br>CN 114902471 A<br>KR 10-2022-0123043 A | |
| JP | 2009-32539 | A | 12 February 2009 | US 2010/0178554 A1<br>claims 1-3, paragraphs [0037],<br>[0038], [0041], [0042], [0048],<br>fig. 2<br>WO 2009/016510 A2<br>CA 2673955 A1<br>KR 10-2010-0032436 A<br>CN 101730950 A | |
| JP | 2012-178256 | A | 13 September 2012 | (Family: none) | |
| JP | 2016-62712 | A | 25 April 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6747636 B